# EUROPÄISCHE PATENTSCHRIFT

(11) **EP 1 028 613 B1**
(45) Veröffentlichungstag und Bekanntmachung des Hinweises auf die Patenterteilung: **12.03.2003**
(21) Anmeldenummer: 99955661.6
(22) Anmeldetag: 01.09.1999
(51) Int. Cl.: A01C 15/00, A01M 7/00, A01B 79/00

(54) **VERFAHREN UND VORRICHTUNG ZUM TEILFLÄCHENSPEZIFISCHEN DÜNGEN VON PFLANZEN**
METHOD AND DEVICE FOR FERTILIZING SPECIFIC PARTIAL AREAS OF PLANTS
DISPOSITIF ET PROCEDE D'APPORT, SPECIFIQUE A DES SURFACES PARTIELLES, D'ENGRAIS A DES PLANTES

(30) Priorität: 03.09.1998 DE 19841991; 18.12.1998 DE 19860306
(43) Veröffentlichungstag der Anmeldung: 23.08.2000
(73) Patentinhaber: NORSK HYDRO ASA, 0240 Oslo (NO)
(72) Erfinder: REUSCH, Stefan, D-48249 Dülmen (DE)
(74) Vertreter: Hannig, Wolf-Dieter, Dipl.-Ing.
(86) Internationale Anmeldenummer: DE9902807
(87) Internationale Veröffentlichungsnummer: WO00013479

(56) Entgegenhaltungen:
- EP-A- 0 458 107
- US-A- 5 144 767
- US-A- 5 585 626

## Beschreibung

Die Erfindung betrifft ein Verfahren zum teilflächenspezifischen Düngen von Pflanzen, bei dem unter natürlicher Beleuchtung während der Düngerausbringung durch reflexionsoptische Messung im sichtbaren und nahinfraroten Spektralbereich mittels Sensoren der Chlorophyllgehalt der Pflanzen festgestellt, angezeigt und daraus das Maß für deren Ernährungszustand bestimmt wird, mit dem ein Rechner die entsprechend auszubringende Düngermenge steuert.

Die Erfindung betrifft ferner eine Vorrichtung zum teilflächenspezifischen Düngen von Pflanzen mit einem verfahrbaren Träger, beispielsweise Fahrzeug, der mit einer Auswerteeinrichtung ausgerüstet ist, einem am Heck des Trägers angebrachten Ausbringer zur variablen Verteilung des Düngers und am Träger befestigten, auf den Pflanzenbestand in Fahrtrichtung dem Träger voranschreitend gerichteten, mit durch Lichtleiter verbundenen Spektrometern zur spektralen Analyse der reflektierten Strahlung, die die Reflexionsdaten zur Auswertung an die Auswerteeinrichtung weiterleiten.

Die US-A-5 144 767 beschreibt ein solches Gerät.

Es ist bekannt, zur Bestimmung des Ernährungszustandes von Pflanzen deren Chlorophyllgehalt heranzuziehen (Prospekt "Precise" der Firma Hydro Agri, 1997). Der Chlorophyllgehalt wird üblicherweise mittels reflexionsoptischer Sensoren ermittelt wie sie beispielsweise grundlegend in der US 4 986 665 beschrieben sind.

Die gewonnenen spektralen Reflexionsdaten werden bei allen bekannten mit natürlichen Licht arbeitenden Lösungen bisher immer in senkrechter Einfallslage von oben bestimmt. Schräge Aufnahmewinkel führen zur Beeinflussung der Reflexionsspektren durch den solaren Azimuthwinkel und somit zur Verfälschung der Meßergebnisse. Definierte Meßbedingungen sind daher sehr schwierig einzuhalten.

Die Einhaltung der senkrechten Einfallslage zieht andererseits äußerst aufwendige konstruktive Befestigungen der Lichtleiter am verfahrbaren Träger nach sich, um die Lichtleiter in ausreichender Entfernung außerhalb des Schattenbereichs des Trägers über den Pflanzenbestand zu führen. Damit eine hinreichend große Fläche des Bestandes abgetastet werden kann, werden mehrere und teure Lichtleiter auf einem, am Träger befestigten, in Breitenrichtung ausklappbaren Gestänge befestigt.

Durch das ausladene Gestänge ist die Manöverierfähigkeit des Trägers/Fahrzeuges auf dem Feld eingeschränkt und es besteht die Gefahr des Anfahrens auf Hindernisse.

Bei diesem Stand der Technik liegt der Erfindung die Aufgabe zugrunde, ein Verfahren und eine Vorrichtung der eingangs genannten Art derart zu verbessern, daß trotz Schrägmessung der Einfluß des solaren Azimuths ausgeschaltet bleibt, die Robustheit und Kompaktheit des Meßsystems zunimmt sowie gleichzeitig das Fahrzeug bzw. der Träger einfacher zu bedienen ist.

Diese Aufgabe wird durch ein Verfahren der eingangs genannten Gattung mit den kennzeichnenden Merkmalen des Anspruches 1
und durch eine Vorrichtung mit den kennzeichnenden Merkmalen des Anspruches 5 und 9 gelöst. Vorteilhafte Ausgestaltungen des Verfahrens und der Vorrichtung sind den Unteransprüchen entnehmbar.

Das erfindungsgemäße Verfahren ermöglicht es, den Chlorophyllgehalt der Pflanzen als ein Maß für deren Ernährungszustand in reflexionsoptischer Schrägvisur zu bestimmen, ohne daß der solare Azimuthwinkel das Meßergebnis beeinflußt und sich das Nutz- zu Störsignalverhältnis verkleinert.
Die erfindungsgemäße Vorrichtung zur Durchführung des Verfahrens hat den Vorteil eines kompakten und robusten Aufbaus bei gleichzeitiger einfacherer Bedienbarkeit.

Mit all diesen Merkmale wird erreicht, daß die erfindungsgemäße Lösung den komplexen Anforderungen einer teilflächenspezifischen Düngung mit hoher Effizienz und Genauigkeit besser gerecht wird.

Weitere Vorteile und Einzelheiten ergeben sich aus der nachfolgenden Beschreibung unter Bezugnahme auf die beigefügten Zeichnungen.

Die Erfindung soll nachstehend an zwei Ausführungsbeispielen näher erläutert werden.

Es zeigen:
- Fig. 1: eine schematische Aufsicht eines landwirtschaftlichen Fahrzeuges mit über Dach befestigter Sensoranordnung,
- Fig. 2: eine schematische Darstellung des Mastes mit der Sensoranordnung,
- Fig. 3: eine Seitenansicht des Fahrzeuges mit Darstellung der Auswerteeinrichtung und Ausbringer,
- Fig. 4: eine weitere Variante einer erfindungsgemäßen Vorrichtung mit Seitlich am Dach befestigter Sensoranordnung in Draufsicht und
- Fig. 5: eine Ansicht der Rückseite gemäß Fig. 4.

### Beispiel 1

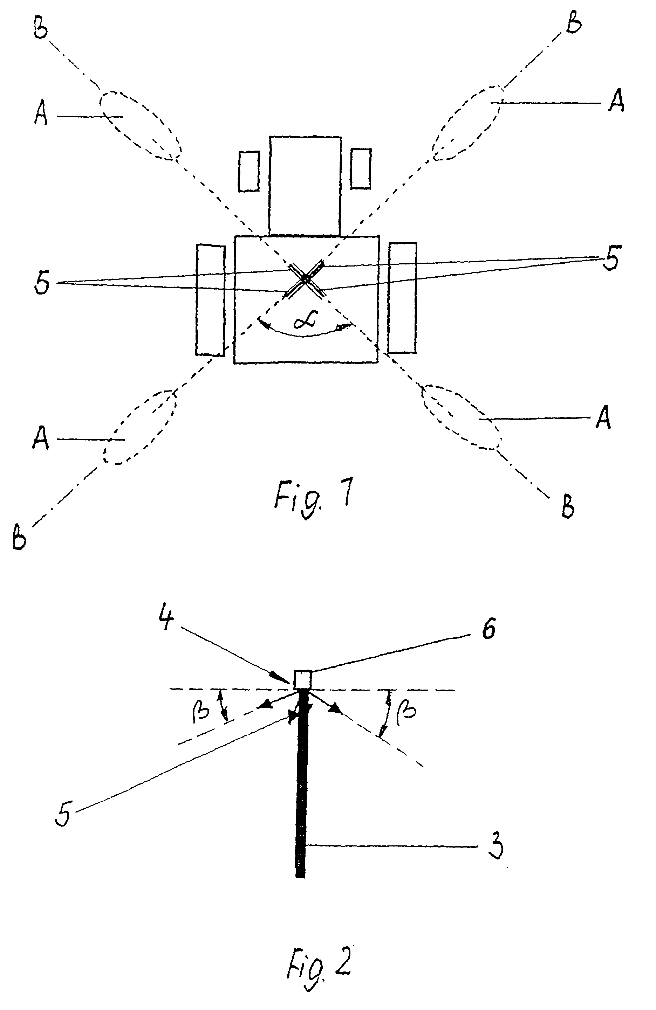

Fig. 1 zeigt ein Schleppfahrzeug **1** als Träger, an dessen Dach **2** ein Mast **3** verhältnismäßig kurzer Länge, beispielsweise 0,8 m, befestigt ist. Am oberen Ende **4** des Mastes **3** befinden sich vier Lichtleiter **5** (Einkoppelpunkte), die in Aufsicht betrachtet zueinander jeweils einen Winkel α von 90° einschließen. Jeder der Lichtleiter **5** ist unter einem Winkel β (Winkel zum Nadir) von 62° zum Pflanzenbestand ausgerichtet. Mittig auf dem Ende **4** des Mastes **3** ist ein Diffusor **6** befestigt, um Einflüsse des Umgebungslichtes zu vermeiden.

Die einzelnen Lichtleiter **5** tasten eine Meßfläche **A** ab, die seitlich vor und hinter dem Schleppfahrzeug **1** liegt. Diese Meßflächen **A** sind in Fig. 1 schematisch als vier Ellipsen dargestellt. Jeweils zwei Lichtleiter **5** liegen entgegengesetzt ausgerichtet auf einer Wirkungslinie **B-B.** Die Wirkungslinien **B-B** mehrerer Lichtleiterpaare, beispielsweise vier Lichtleiter **5**, liegen senkrecht zueinander. Alle Einkoppelpunkte sind so gleichmäßig voneinander beabstandet.

Am Mast **3** führt ein Lichtleiter **7** entlang, der am Ende **4** des Mastes **3** zur Bildung der Einkoppelpunkte vierfach aufgespleißt ist und die Lichtleiter **5** bildet. Jeweils ein nicht dargestelltes Spektrometer für die reflektierte Strahlung und ein Spektrometer für die Einstrahlungsmessung sind dann notwendig (siehe Fig. 2).

Durch die symmetrische Anordnung der Einkoppelpunkte im 90°-Winkel wird eine weitgehende Unabhängigkeit des aufgenommenen Signals vom solaren Azimuthwinkel erreicht, da immer für jeweils einen der Lichtleiter **5** die Sonne von hinten, links, vorne und rechts scheint. Effekte aufgrund des Azimuthwinkels zwischen Sonne und Lichtleiter heben sich somit durch Mittelung der Signale aus allen vier Richtungen auf.

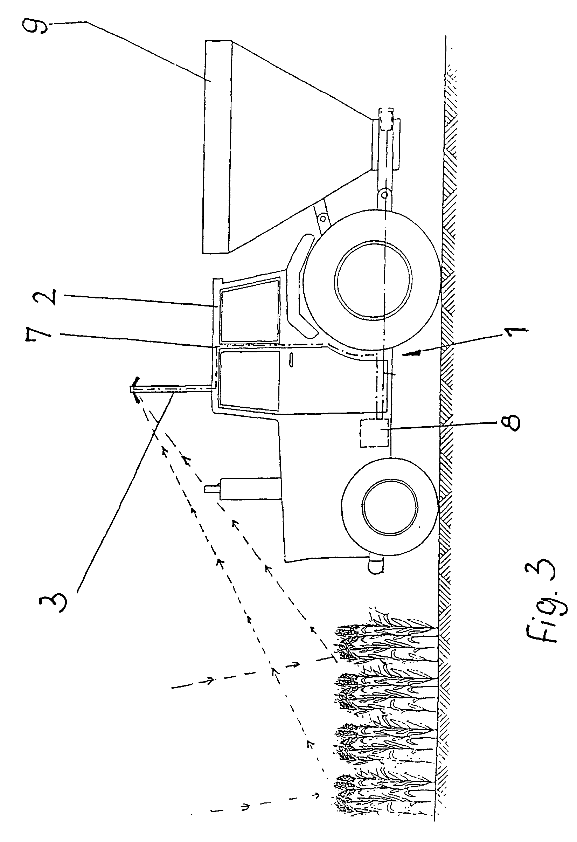

Größe und Abstand der Meßflächen **A** von der Fahrspurmitte lassen sich so wählen, daß die Meßflächen außerhalb des Schattenbereiches des Schleppfahrzeuges liegen. Im vorliegenden Beispiel ergibt sich bei einer Höhe von 4,5 m über Grund, einem Öffnungswinkel der Faser von 12° und dem vorgenannten Blickwinkel β von 62° ein 4 m breiter Streifen links und rechts der Fahrspurmitte, der abgetastet wird. Der innere Rand dieser Streifen liegt ausreichend weit vom Schattenbereich des Schleppfahrzeuges entfernt.
Die von den Lichtleitern **5** erfaßte Reflexionsstrahlung wird, wie in Fig. 3 gezeigt, der Auswerteeinrichtung **8** zugeführt, in der der Chlorophyllgehalt der Pflanzen ermittelt wird, der als Maß für den Ernährungszustand über einen Bordcomputer den Ausbringer **9** steuert.

### Beispiel 2

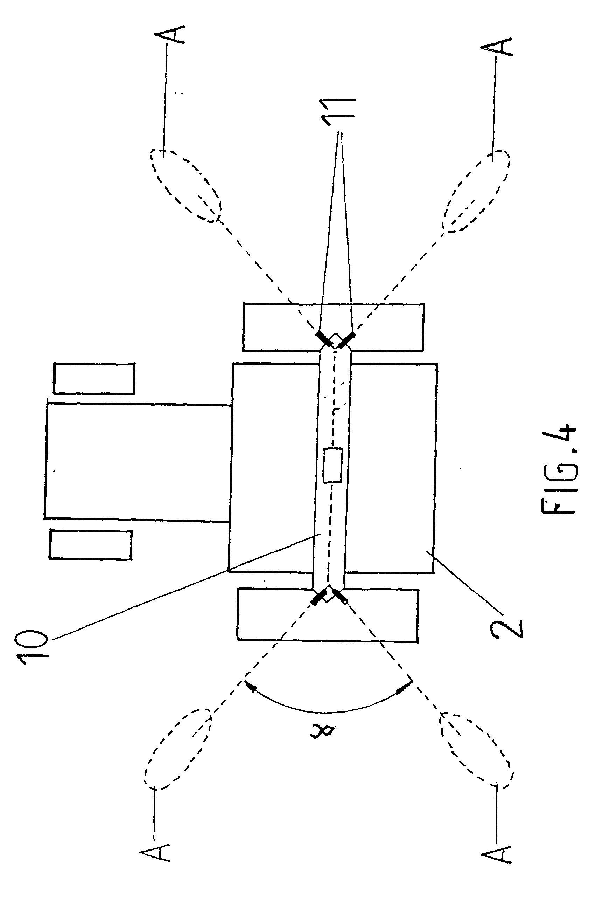

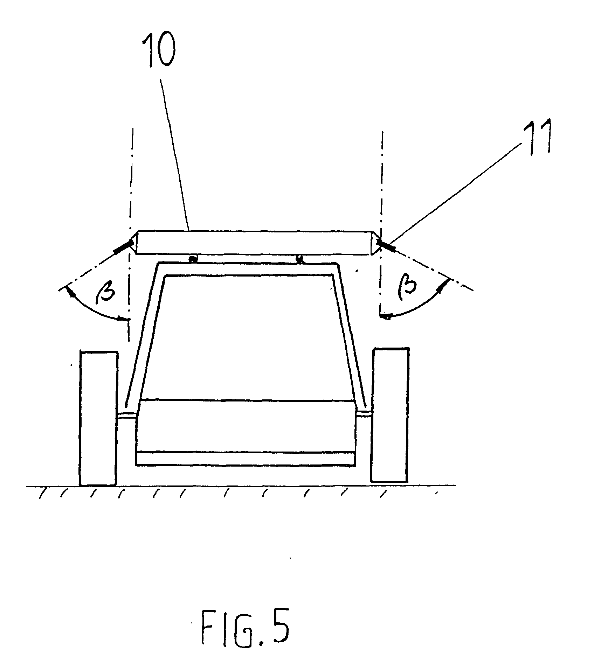

In Fig. 4 und 5 ist eine weitere Variante einer erfindungsgemäßen Sensoranordnungbefestigung gezeigt. Am Dach **2** des Trägers ist quer zur Fahrtrichtung ein das Dach **2** beidseitig seitlich überkragender Tragarm **10** befestigt. Der Tragarm **10** trägt jeweils an seinem vorderen Ende zwei schwenkbar einstellbare Lichtleiterenden **11**, die vorzugsweise in einem Winkel β von 60° (Schräglage) zum Pflanzenbestand ausgerichtet sind. Beide Lichtleiterenden **11** schließen miteinander einen Winkel α von 90° ein.

### Aufstellung der verwendeten Bezugszeichen

- Schleppfahrzeug: 1
- Dach: 2
- Mast: 3
- oberes Ende von 3: 4
- Lichtleiter (Einkoppelpunkte): 5
- Diffusor: 6
- Lichtleiter: 7
- Auswerteeinrichtung: 8
- Ausbringer: 9
- Tragarm: 10
- Lichtleiterenden: 11
- Meßfläche: A
- Wirkungslinie: B-B
- Winkel zwischen den Wirkungslinien bzw. den Lichtleiterenden: α
- Blickwinkel (Winkel zum Nadir) bzw. Schräglage: β

## Patentansprüche

1. Verfahren zum teilflächenspezifischen Düngen von Pflanzen, bei dem unter natürlicher Beleuchtung während der Düngerausbringung durch reflexionsoptische Messung im sichtbaren und nahinfraroten Spektralbereich mittels Sensoren der Chlorophyllgehalt der Pflanzen festgestellt, angezeigt und daraus das Maß für deren Ernährungszustand bestimmt wird, mit dem ein Rechner die entsprechend auszubringende Düngermenge steuert, **dadurch gekennzeichnet, daß** die Reflexionsmessung als Schrägmessung zum Nadir gleichzeitig in gegeneinander gerichteten Meßrichtungen schattenfrei mit Lichtleitern ausgeführt und der Einfluß des solaren Azimuthwinkels durch Mittelung des Störsignals aus allen Meßrichtungen eliminiert wird.

2. Verfahren nach Anspruch 2, **dadurch gekennzeichnet, daß** die Schrägmessung in mindestens vier Meßrichtungen durchgeführt wird, wobei die Zahl der Meßrichtungen geradzahlig ist.

3. Verfahren nach Anspruch 2 und 3, **dadurch gekennzeichnet, daß** die Schrägmessung zusätzlich bei künstlicher Beleuchtung durchgeführt wird.

4. Verfahren nach Anspruch 1 bis 3, **dadurch gekennzeichnet, daß** die Schrägmessung aus mehreren übereinander liegenden Ebenen durchgeführt wird, wobei die Winkelstellung zum Nadir von Ebene zu Ebene unterschiedlich eingestellt wird.

5. Vorrichtung zum teilflächenspezifischen Düngen von Pflanzen zur Durchführung des Verfahrens nach Anspruch 1 mit einem verfahrbaren Träger (2), beispielsweise Fahrzeug (2), der mit einer Auswerteeinrichtung ausgerüstet ist, einem am Heck des Trägers (2) angebrachten Ausbringer (3) zur variablen Verteilung des Düngers und am Träger (2) befestigten, auf den Pflanzenbestand in Fahrtrichtung dem Träger (2) voranschreitend gerichteten, mit durch Lichtleiter (5) verbundenen Spektrometern zur spektralen Analyse der reflektierten Strahlung, die die Reflexionsdaten zur Auswertung an die Auswerteeinrichtung weiterleiten, **dadurch gekennzeichnet, daß** die Lichtleiter **(5)** auf einer gegenüber dem Träger erhöht gelegenen, mit dem Träger bewegenden Position in einer Schräglage (β) gegenüber dem Pflanzenbestand so zueinander angeordnet sind, daß jeweils zwei Lichtleiter gegeneinander gerichtet auf einer Wirkungslinie liegen und die Wirkungslinien voneinander beabstandet einen gleichen Winkel **(α)** einschließen, wobei die von den Lichtleitern **(5)** überstrichenen Meßflächen **(A)** ständig außerhalb des Schattenbereiches des Trägers angeordnet sind, und daß den Lichtleitern **(5)** in der erhöhten Position mindestens ein Diffusor **(6)** für den Abgleich auf die aktuelle Lichteinstrahlung zugeordnet ist.

6. Vorrichtung nach Anspruch 5, **dadurch gekennzeichnet, daß** die Schräglage **(β)** der Lichtleiter **(5)** 50° bis 75°, vorzugsweise 62°, beträgt.

7. Vorrichtung nach Anspruch 5, **dadurch gekennzeichnet, daß** der Winkel **(α)** vorzugsweise 30° bis 90°, vorzugsweise 90°, beträgt.

8. Vorrichtung nach Anspruch 5 bis 7, **dadurch gekennzeichnet, daß** die Lichtleiter **(5)** in mehreren übereinander liegenden Ebenen angeordnet sind, wobei die Schräglage **(β)** aller Lichtleiter **(5)** in einer Ebene gegenüber der Schräglage **(β)** aller Lichtleiter **(5)** in der anderen Ebene verschieden ist.

9. Vorrichtung zum teilflächenspezifischen Düngen von Pflanzen zur Durchführung des Verfahrens nach Anspruch 1 mit einem verfahrbaren Träger (2), beispielsweise Fahrzeug (2), der mit einer Auswerteeinrichtung ausgerüstet ist, einem am Heck des Trägers (2) angebrachten Ausbringer (3) zur variablen Verteilung des Düngers und am Träger (2) befestigten, auf den Pflanzenbestand in Fahrtrichtung dem Träger voranschreitend gerichteten, mit durch Lichtleiter (5) verbundenen Spektrometern zur spektralen Analyse der reflektierten Strahlung, die die Reflexionsdaten zur Auswertung an die Auswerteeinrichtung weiterleiten, **dadurch gekennzeichnet, daß** die Lichtleiter **(5)** auf einer gegenüber dem Träger erhöht gelegenen, mit dem Träger bewegenden Position in einer Schräglage **(β)** gegenüber dem Pflanzenbestand so zueinander angeordnet sind, daß jeweils zwei das Fahrzeugdach seitlich überkragende Lichtleiterenden **(11)** in der Schräglage **(β)** miteinander einen gleichen Winkel **(α)** einschließen, wobei die von den Lichtleitern **(5)** überstrichenen Meßflächen **(A)** ständig außerhalb des Schattenbereiches des Trägers angeordnet sind, und daß den Lichtleitern **(5)** in der erhöhten Position mindestens ein Diffusor **(6)** für den Abgleich auf die aktuelle Lichteinstrahlung zugeordnet ist.

10. Vorrichtung nach Anspruch 9, **dadurch gekennzeichnet, daß** die Schräglage **(β)** 60° bis 70° beträgt.

11. Vorrichtung nach Anspruch 9, **dadurch gekennzeichnet, daß** der Winkel **(α)** 90° beträgt.

12. Vorrichtung nach einem oder mehreren der vorherigen Ansprüche 5 bis 11, **dadurch gekennzeichnet, daß** die Lichtleiter **(5)** an einem auf dem Dach des Trägers oder anderen am Träger befestigten Anbauten bzw. Einrichtungen befestigten Mast **(3)** angeordnet sind.

13. Vorrichtung nach einem oder mehreren der vorherigen Ansprüche 5 bis 12, **dadurch gekennzeichnet, daß** die Lichtleiter **(5)** aus einem mehrfach, vorzugsweise vierfach, gespleißten Lichtleiter **(7)** gebildet sind.

14. Vorrichtung nach Anspruch 5 und 9, **dadurch gekennzeichnet, daß** den Lichtleitern **(5)** und dem Diffusor **(6)** jeweils ein gesondertes Spektrometer zugeordnet ist.

15. Vorrichtung nach einem oder mehreren der vorherigen Ansprüche 5 bis 14, **dadurch gekennzeichneten**, **daß** der Öffnungswinkel der Faser des Lichtleiters **(7)** 5° bis 15°, vorzugsweise 12°, beträgt.

## Claims

1. Method of partial area-specific-fertilization of plants which, under natural light during the fertilizer application, the chlorophyll content of the plants is ascertained by means of sensors by optical reflection measurement in the visible and near infrared spectral ranges, the chlorophyll content is registered and from the chlorophyll content a measurement of the nutrient state of the plant is determined and from the nutrient state of the plants a computer controls the fertilizer quantity to be applied, **characterized in that** the reflection measurements are taken simultaneously as inclined measurements with respect to the nadir with measurement devices oriented oppositely to one another free from shadows with light guides and the influence of the solar azimuth is eliminated by detecting the noise signals from all measurements directions.

2. Method according to claim 1, **characterized in that** the inclined measurement is carried out in at least for measurement devices whereby the number of measurement devices is an even number.

3. Method according to claims 1 and 2, **characterized in that** the inclined measurement is carried out additionally with artificial lighting.

4. Method according to claim 1 to 3, **characterized in that** the inclined measurement is carried out from a plurality of superposed plants whereby the angular position of the nadir differs from plane to plane.

5. Device for the partial-area-specific fertilization of plants for carrying out the method according to claim 1 with a displaceable carrier (2), for example, a vehicle (2) which is equipped with evaluating device, a dispenser on the rear of the carrier (2) for variable distribution (3) of the fertilizer and affixed to carrier (2) trained advancingly on the plant sock in the travel direction of the carrier and connected with a spectrometer for spectral analysis of the reflected radiation which supplies the reflection of date for evaluation of the evaluating unit, **characterized in that** the light guide (5) is held in a raised position with respect to the carrier which is moved with the carrier and is so oriented at an inclined orientation (β) with respect to the plant stock and has two light guides oriented opposite one another or along a common effective line and the effective lines are spaced from one another by the same angle (α) included between them, whereby the measurement areas (A) scanned by the light guides (5) continuously lie outside the shadow region of the carrier and **in that** the light guides (5) in the raised position have at least one diffusor (6) for balancing out the ambient light radiation.

6. Device according to claim 5, **characterized in that** the inclined orientation (β) of the light guides (5) amounts to 50° to 75°, preferably 62°.

7. Device according to claim 5, **characterized in that** the angle (α) is preferably 30° to 90°.

8. Device according to claim 5 to 7 **characterized in that** the light guides (5) is oriented in a plurality of planes lying one above another whereby the inclined orientation (β) of all light guides (5) in one plane differs from the inclined orientation (β) of all light guides (5) in another plane.

9. Device for the partial-area-specific fertilization of plants for carrying out the method according to claim 1 with a displaceable carrier (2), for example, a vehicle (2) which is equipped with evaluating device, a dispenser on the rear of the carrier (2) for variable distribution (3) of the fertilizer and affixed to carrier (2) trained advancingly on the plant sock in the travel direction of the carrier and connected with a spectrometer for spectral analysis of the reflected radiation which supplies the reflection of date for evaluation of the evaluating unit, **characterized in that** the light guide (5) is elevated above the carrier and movable with the carrier and oriented at an inclined orientation (β) with respect to the plant stock such that each two light guide ends (11) cantilevered laterally from vehicle roof with the inclined orientation (β) include a common angle (α) with one another, whereby the measurement areas (A) scanned by the light guides (5) continuously lie outside the shadow region of the carrier and **in that** the light guides (5) in the raised position have at least one diffusor (6) for balancing out the ambient light radiation.

10. Device according to claim 9, **characterized in that** the inclined orientation (β) amounts to 60° to 70°.

11. Device according to claim 9, **characterized in that** the angle (α) amounts to 90°.

12. Device according to one or more of the preceding claims 5 to 11, **characterized in that** the light guides (5) are attached on the roof of the carrier or on other structures affixed to the carrier or on a mast (3) affixed thereto.

13. Device according to one or more of the preceding claim 5 to 12, **characterized in that** the light guides (5) are formed from a light guide (7) split into a multiplicity. Preferably four-fold of light guides.

14. Device according to claims 5 and 9, **characterized in that** light guides (5) and the diffuser (6) each are associated with a respective spectrometer,

15. Device according to one or more of the preceding claims 5 to 14, **characterized in that** the aperture angle of the light guide (7) is 5° to 15°, preferably 12°.

## Revendications

1. Procédé destiné à engraisser des surfaces partielles spécifiques de plantes, dans lequel - à un éclairage naturel, durant l'épandage de l'engrais - la teneur en chlorophylle des plantes est constatée par une mesure d'optique à réflexion dans le domaine spectral visible et proche de l'infrarouge au moyen de capteurs et est indiquée, et la mesure pour leur état nutritionnel en est déterminée avec lequel un ordinateur commande la quantité d'engrais à épandre au fur et à mesure, **caractérisé par le fait que** la mesure à réflexion est effectuée en tant que mesure oblique par rapport au nadir, simultanément dans des directions de mesure dirigées l'une contre l'autre, sans ombre avec des guides de lumière et que l'influence de l'angle azimutal solaire est éliminée en faisant la moyenne du signal parasite de toutes les directions de mesure.

2. Procédé selon la revendication 1, **caractérisé par le fait que** la mesure oblique est effectuée dans au moins quatre directions de mesure, le nombre des directions de mesure étant pair.

3. Procédé selon la revendication 1 et 2, **caractérisé par le fait que** la mesure oblique est effectuée en sus à un éclairage artificiel.

4. Procédé selon la revendication 1 à 3, **caractérisé par le fait que** la mesure oblique est effectuée depuis plusieurs plans situés l'un au-dessus de l'autre, la position angulaire par rapport au nadir étant réglée différemment de plan en plan.

5. Dispositif destiné à engraisser des surfaces partielles spécifiques de plantes, pour la mise en oeuvre du procédé selon la revendication 1, avec un support déplaçable (2), tel qu'un véhicule (2), qui est équipé d'un dispositif d'évaluation, avec un dispositif d'épandage (9) disposé à l'arrière du support (2) et destiné à la distribution variable de l'engrais et avec des spectromètres pour l'analyse spectrale du rayonnement réfléchi, qui transmettent les données de réflexion pour l'évaluation au dispositif d'évaluation, lesdits spectromètres étant fixés sur le support (2), étant dirigés sur la quantité des plantes en marchant en tête du support (2) en sens de marche et étant reliés par des guides de lumière (5), **caractérisé par le fait que** les guides de lumière (5) - sur une position élevée par rapport au support où ils se déplacent avec le support - sont disposés dans une position oblique (β) par rapport à la quantité des plantes de telle manière l'un à l'autre que respectivement deux guides de lumière, dirigés l'un contre l'autre, sont placés sur une ligne d'action et les lignes d'action, espacées l'une de l'autre, incluent un même angle (α), les surfaces de mesure (A) balayées par les guides de lumière (5) étant disposées continuellement à l'extérieur de la zone d'ombre du support, et que du moins un diffuseur (6) pour l'égalisation avec la radiation incidente actuelle de lumière est associé aux guides de lumière (5) dans la position élevée.

6. Dispositif selon la revendication 5, **caractérisé par le fait que** la position oblique (β) des guides de lumière (5) est comprise entre 50° et 75°, de préférence elle est de 62°.

7. Dispositif selon la revendication 5, **caractérisé par le fait que**, de préférence, l'angle (α) est compris entre 30° et 90°, de préférence il est de 90°.

8. Dispositif selon la revendication 5 à 7, **caractérisé par le fait que** les guides de lumière (5) sont disposés dans plusieurs plans situés l'un au-dessus de l'autre, la position oblique (β) de tous les guides de lumière (5) dans un plan étant différente par rapport à la position oblique (β) de tous les guides de lumière (5) dans l'autre plan.

9. Dispositif destiné à engraisser des surfaces partielles spécifiques de plantes, pour la mise en oeuvre du procédé selon la revendication 1, avec un support déplaçable (2), tel qu'un véhicule (2), qui est équipé d'un dispositif d'évaluation, avec un dispositif d'épandage (9) disposé à l'arrière du support (2) et destiné à la distribution variable de l'engrais et avec des spectromètres pour l'analyse spectrale du rayonnement réfléchi, qui transmettent les données de réflexion pour l'évaluation au dispositif d'évaluation, lesdits spectromètres étant fixés sur le support (2), étant dirigés sur la quantité des plantes en marchant en tête du support (2) en sens de marche et étant reliés par des guides de lumière (5), **caractérisé par le fait que** les guides de lumière (5) - sur une position élevée par rapport au support où ils se déplacent avec le support - sont disposés dans une position oblique **(β)** par rapport à la quantité des plantes de telle manière l'un à l'autre que respectivement deux extrémités de guides de lumière (11) en saillie latérale du toit de véhicule incluent l'une avec l'autre un même angle (α) dans la position oblique (β), les surfaces de mesure (A) balayées par les guides de lumière (5) étant disposées continuellement à l'extérieur de la zone d'ombre du support, et que du moins un diffuseur (6) pour l'égalisation avec la radiation incidente actuelle de lumière est associé aux guides de lumière (5) dans la position élevée.

10. Dispositif selon la revendication 9, **caractérisé par le fait que** la position oblique (β) est comprise entre 60° et 70°.

11. Dispositif selon la revendication 9, **caractérisé par le fait que** l'angle (α) est de 90°.

12. Dispositif selon l'une ou plusieurs des revendications précédentes 5 à 11, **caractérisé par le fait que** les guides de lumière (5) sont disposés sur un poteau (3) fixé sur le toit du support ou sur d'autres constructions additionnelles ou bien dispositifs fixés sur le support.

13. Dispositif selon l'une ou plusieurs des revendications précédentes 5 à 12, **caractérisé par le fait que** les guides de lumière (5) sont formés à partir d'un guide de lumière (7) épissé plusieurs fois, de préférence quatre fois.

14. Dispositif selon la revendication 5 et 9, **caractérisé par le fait que** respectivement un spectromètre séparé est associé aux guides de lumière (5) et au diffuseur (6).

15. Dispositif selon l'une ou plusieurs des revendications précédentes 5 à 14, **caractérisé par le fait que** l'angle d'ouverture de la fibre du guide de lumière (7) est compris entre 5° et 15°, de préférence il est de 12°.
